# EUROPÄISCHE PATENTSCHRIFT

(11) **EP 4 545 424 B1**
(45) Veröffentlichungstag und Bekanntmachung des Hinweises auf die Patenterteilung: **09.12.2026**
(21) Anmeldenummer: 24208810.2
(22) Anmeldetag: 25.10.2024
(51) Int. Cl.: B64U 80/10, B64F 1/222, B64U 80/70

(54) **HANGAR FÜR MINDESTENS EIN UNBEMANNTES LUFTFAHRZEUG**
HANGAR FOR AT LEAST ONE UNMANNED AERIAL VEHICLE
HANGAR POUR AU MOINS UN VÉHICULE AÉRIEN SANS PILOTE

(30) Priorität: 27.10.2023 DE 102023129804
(43) Veröffentlichungstag der Anmeldung: 30.04.2025
(73) Patentinhaber: Björn Steiger Stiftung (Stiftung des bürgerlichen Rechts), 71364 Winnenden (DE)
(72) Erfinder: Mihm, Andreas, 78315 Radolfzell (DE); von Beesten, Joachim, 40593 Düsseldorf (DE)
(74) Vertreter: K&L Gates LLP

(56) Entgegenhaltungen:
- WO-A1-2023/182921
- CN-B- 110 606 220
- CN-B- 115 610 275
- KR-A- 20230 117 015
- US-B2- 10 974 911
- US-B2- 9 776 717

## Beschreibung

Die vorliegende Erfindung betrifft einen Hangar für wenigstens ein unbemanntes Luftfahrzeug, mit mindestens einem Manipulatorarm zum Transport eines unbemannten Luftfahrzeugs in und/oder aus dem Hangar an seine Oberfläche.

Aus dem Stand der Technik sind bereits Hangars für unbemannte Luftfahrzeuge bekannt, umfassend eine Vorrichtung, die dazu geeignet ist ein unbemanntes Luftfahrzeug zu greifen und/oder in und/oder aus dem Hangar zu transportieren.

So ist beispielsweise aus der CN214420705U ein Hangar für ein unbemanntes Luftfahrzeug bekannt, welcher unter anderem eine ausfahrbare Greifvorrichtung (Klaue) für ein spezifisches, unbemanntes, sich im Anflug findendes Luftfahrzeug umfasst.

Die CN110589007B offenbart einen Hangar für unbemannte Luftfahrzeuge auf Schwerlast-Industrieniveau, umfassend einen mechanischen Arm zum Heben eines spezifischen unbemannten Luftfahrzeugs nach oben, aus dem geöffneten Hangar hinaus.

Die CN110606220B, US9776717B2, US10974911B2, WO2023/182921A1 und KR20230117015A offenbaren jeweils eine Aufbewahrungsvorrichtung mit einem mechanischen Arm für ein unbemanntes Luftfahrzeug.

Es ist die Aufgabe der vorliegenden Erfindung einen Hangar für mindestens ein unbemanntes Luftfahrzeug der eingangs genannten Art in vorteilhafter Weise weiterzubilden, insbesondere dahingehend, dass der Hangar eine Vorrichtung umfasst, die zum Greifen und/oder Transport unbemannter Luftfahrzeuge mit unterschiedlichen Eigenschaften geeignet ist.

Diese Aufgabe wird erfindungsgemäß gelöst durch einen Hangar mit den Merkmalen des Anspruchs 1. Danach ist vorgesehen, dass ein Hangar für mindestens ein unbemanntes Luftfahrzeug, umfasst:
einen Innenraum, der durch eine Unterseite, eine Oberseite und mindestens ein Seitenteil begrenzt wird,
wenigstens einen Manipulatorarm in dem Innenraum,
wobei der Manipulatorarm ausgestaltet ist, das mindestens eine unbemannte Luftfahrzeug durch eine verschließbare Öffnung in dem mindestens einen Seitenteil aus dem Innenraum auf die äußere Oberseite des Hangars zu transportieren und/oder
wobei der Manipulatorarm ausgestaltet ist, das mindestens eine unbemannte Luftfahrzeug durch eine verschließbare Öffnung in dem mindestens einen Seitenteil von der äußeren Oberseite des Hangars in den Innenraum zu transportieren,
wobei der Manipulatorarm für den Transport verschiedener unbemannter Luftfahrzeuge mit unterschiedlichen Eigenschaften programmierbar und/oder eingerichtet ist.

Die Erfindung basiert auf dem Grundgedanken, dass unterschiedliche unbemannte Luftfahrzeuge sicher im Hangar positioniert, aufbewahrt und/oder aus dem Hangar freigegeben werden können. Mit anderen Worten, der Manipulatorarm, sowie der Innenraum des Hangars sind so gestaltet, dass eine große Spannbreite hinsichtlich der zu greifenden und/oder zu transportierenden und/oder parkenden unbemannten Luftfahrzeuge erreicht wird, weil der Hangar mit samt des Manipulatorarms und/oder des Innenraums nicht spezifisch für eine Ausführung eines unbemannten Luftfahrzeugs konfiguriert und/oder vorprogrammiert wurde. Insbesondere wird dies ermöglicht durch einen Manipulatorarm, der derart gestaltet ist, dass er unterschiedliche unbemannte Luftfahrzeuge sicher greifen und/oder transportieren kann, von der äußeren Oberseite des Hangars in den Innenraum (beispielsweise auf eine Ebene) oder aus dem Innenraum (beispielsweise von einer Ebene) auf die äußere Oberseite.

Der Manipulatorarm oder ein den Manipulatorarm steuerndes Kontrollmodul kann so programmiert werden, dass er entweder ein bestimmtes oder mehrere unterschiedliche Luftfahrzeuge identifizieren, greifen und/oder transportieren kann.

Unterschiedliche Eigenschaften unbemannter Luftfahrzeuge können beispielsweise Hersteller, Typ und/oder Ausgestaltung umfassen.

Der Manipulatorarm kann dabei wenigstens drei Gelenke umfassen. Mögliche Gelenkarten können Kugelgelenke, Scharniergelenke, Sattelgelenke, Eigelenke und/oder Drehgelenke umfassen. Dies ermöglicht dein Einsatz des Manipulatorarms im Hangar zur Sicherung aller notwendigen Bewegungsbereiche. Insbesondere kann der Manipulatorarm ein Manipulatorarm mit sechs Achsen sein, wodurch eine Manipulation des mindestens einen unbemannten Luftfahrzeugs in sechs Freiheitsgraden ermöglicht wird. Es kann demnach möglich sein, die Position des mindestens einen unbemannten Luftfahrzeugs durch Translationen entlang der drei lotrechten Achsen vor/zurück, hinauf/hinunter und links/rechts sowie seine Orientierung durch Rotationen um die drei lotrechten Achsen, rollen (Rotation um die Längsachse), nicken (Rotation um die Querachse) und gieren (Rotation um die Hochachse), frei zu verändern. Alternativ ist ein Manipulatorarm mit vier Freiheitsgraden, fünf Freiheitsgraden oder sieben Freiheitsgraden denkbar.

Denkbar ist, dass in dem Innenraum wenigstens eine Ebene angeordnet ist, welche dazu eingerichtet ist, jeweils mindestens ein unbemanntes Luftfahrzeug zu tragen. Dies ermöglicht unter anderem, dass in dem Innenraum (beispielsweise unter der Ebene) noch andere Elemente und/oder Module angeordnet werden können, sodass keine Kollision mit dem Manipulatorarm und den anderen Elementen entsteht. So können Schäden am Manipulatorarm, an den anderen Elementen und/oder dem unbemannten Luftfahrzeug vermieden werden.

Insbesondere kann weiter vorgesehen sein, dass der Innenraum mehrere Ebenen umfasst, welche dazu eingerichtet sind, jeweils mindestens ein unbemanntes Luftfahrzeug zu tragen. Somit ist es möglich, dass mehrere gleiche oder unterschiedliche unbemannte Luftfahrzeuge in dem Hangar aufbewahrt und/oder rein- oder raustransportiert werden. Ein Hangar kann also als Aufbewahrung und/oder Basis für mehrere unbemannte Luftfahrzeuge benutzt werden. Dies hat den Vorteil, dass Platz und Kosten gesenkt werden können, im Vergleich zur Aufbewahrung je eines unbemannten Luftfahrzeugs in je einem Hangar.

Es kann auch vorgesehen sein, dass die wenigstens eine Ebene dazu eingerichtet ist oder die mehreren Ebenen dazu eingerichtet sind, mehrere unbemannte Luftfahrzeuge zu tragen. Somit ist es möglich, dass mehrere gleiche oder unterschiedliche unbemannte Luftfahrzeuge in dem Hangar aufbewahrt und/oder rein- oder raustransportiert werden. Wie zuvor beschrieben hat dies den Vorteil, dass Platz und Kosten für die Aufbewahrung von mehreren unbemannten Luftfahrzeugen gesenkt werden können, verglichen mit der Aufbewahrung je eines unbemannten Luftfahrzeugs in je einem Hangar.

Der Hangar kann über den Manipulatorarm unterschiedliche Typen von unbemannten Luftfahrzeugen auf das Dach des Hangars setzen, von wo aus diese starten. So können entweder mehrere unbemannte Luftfahrzeuge desselben Typs nacheinander starten, um das Einsatzgebiet zu vergrößern oder die Einsatzdauer durch Ablösen verlängern. Denkbar ist auch der Einsatz unterschiedlicher unbemannter Luftfahrzeuge mit unterschiedlicher Sensorik.

Zudem ist es denkbar, dass der Manipulatorarm zusätzlich oder alternativ eingerichtet ist, insbesondere automatisiert, andere Gegenstände als unbemannte Luftfahrzeuge zu greifen und/oder in oder aus dem Hangar zu transportieren und/oder im Hangar zu transportieren und/oder zu verbauen. Derartige Gegenstände können Gegenstände umfassen, die zusätzlich zu dem mindestens einen unbemannten Luftfahrzeug im Hangar gelagert werden, und/oder Teile (z.B.) Ersatzteile für das mindestens eine unbemannte Luftfahrzeug und/oder Verbrauchsmaterial bzw. Gegenstände, mit welchen das mindestens eine unbemannte Luftfahrzeug beladen werden kann. Denkbar ist beispielsweise, dass Verbrauchsmaterial (z.B. Rettungsmaterialien wie abwerfbare Schwimmkörper, z.B.Restube) und/oder Sensorik (z.B. eine Ultraschallkugel für die Suche nach Vermissten unter der Wasserlinie) und/oder beschädigte oder abgenützte Teile des Hangars oder eines unbemannten Luftfahrzeugs, z.B. Landegestelle, vorzugsweise inkl. Akkus, durch den Manipulatorarm gegriffen und/oder transportiert und/oder verbaut werden können. Denkbar ist, dass der Manipulatorarm eingerichtet ist, die Verbrauchsmaterialien, Sensorik und/oder beschädigte oder abgenützte Teile des unbemannten Luftfahrzeugs oder Hangars aufzufüllen und/oder zu ersetzen. Verbrauchsmaterial kann dabei im Hangar vorgehalten werden. In anderen Worten, es wird ermöglicht, Verbrauchsmaterial und/oder Ersatzteile (inkl. ganzer Ersatzmodule) für ein unbemanntes Luftfahrzeug automatisiert im Hangar aufzufüllen und/oder auszutauschen. Der Austausch und/oder das Nachfüllen kann mithilfe des Manipulatorarms oder anderer Mechaniken geschehen. Es wird ermöglicht, Verbrauchsmaterial und/oder Ersatzteile (inkl. ganzer Ersatzmodule) für ein unbemanntes Luftfahrzeug automatisiert im Hangar aufzufüllen und/oder auszutauschen.

Es kann auch vorgesehen sein, dass die äußere Oberseite eine Start- und/oder Landefläche für das mindestens eine unbemannte Luftfahrzeug umfasst. Es ist also keine zusätzliche Start- und/oder Landefläche nötig, die beispielsweise über einen Teleskoparm ausgefahren werden müsste. Dadurch wird Material gespart und der Hangar umfasst weniger Teile, die potentiell Schaden nehmen können. Ein Hangar mit einer Öffnung in dem mindestens einen Seitenteil und einer Start- und/oder Landefläche auf der äußeren Oberseite ermöglicht es, dass die Start- und/oder Landefläche als solche genutzt werden kann, auch wenn gerade ein unbemanntes Luftfahrzeug durch den Manipulatorarm in oder aus dem Innenraum transportiert wird. Dies ist insbesondere von Vorteil, wenn der Hangar als Aufbewahrung für mehrere unbemannte Luftfahrzeuge dient oder dienen soll. Es ist beispielsweise möglich, dass ein unbemanntes Luftfahrzeug gerade durch den Manipulatorarm abgestellt wird, während mindestens ein unbemanntes Luftfahrzeug gerade auf der Landefläche landet. Dies ermöglicht es beispielsweise, dass Schäden durch Gewitter und/oder Starkregen an den unbemannten Luftfahrzeugen und/oder dem Innenraum, sowie den darin befindlichen Elementen, Modulen und/oder Luftfahrzeugen verhindert werden können, da ein zügiges Aufräumen/Verstauen mehrerer unbemannter Luftfahrzeuge erreicht wird.

Generell wird durch eine Öffnung des mindestens einen Seitenteils und eine geschlossene Oberseite des Hangars ein Schutz vor Witterung und/oder herabfallendem Schmutz ermöglicht.

Der Hangar kann ferner ein Temperaturregulationsmodul umfasst, welches dazu eingerichtet, die Temperatur im Innenraum auf einen vorprogrammierten Wert zu regulieren. So ist es möglich, die Temperatur im Hangar im Vergleich zur Außentemperatur niedrig oder hoch zu halten (je nach Höhe der Außentemperatur). Dies ermöglicht die Verringerung von Schäden, bedingt durch sehr hohe oder sehr niedrige Temperaturen, an sich im Hangar befindlichen unbemannten Luftfahrzeugen und/oder Modulen/Elementen des Hangars. Zur Feststellung des Istzustands kann das Temperaturregulationsmodul mindestens ein Thermometer in und/oder außerhalb des Hangars umfassen.

Der Hangar kann ferner ein Schließmodul umfassen, umfassend die verschließbare Öffnung, Das Schließmodul kann eingerichtet sein, die verschließbare Öffnung durch eine Klappe oder Türe zu öffnen, zu schließen, offen zu halten oder geschlossen zu halten. Ein derartiges Schließmodul kann es ermöglichen, dass der Hangar nur geöffnet ist, wenn tatsächlich ein unbemanntes Luftfahrzeug vom Innenraum nach außen oder von außen in den Innenraum transportiert wird. So kann ein ungewollter Luft- und/oder Temperaturaustausch vermieden werden. Außerdem kann so erreicht werden, dass möglichst wenig Schmutz und/oder Staub, Wasser und/oder unerwünschte Lebewesen in den Innenraum des Hangars gelangen. Denkbar ist, dass die Funktion des Schließmoduls an eine andere Funktion des Hangars und/oder seiner Elemente oder Module und/oder deren Position gekoppelt ist. Beispielsweise ist es denkbar, dass die Schließung der Öffnung durch das Schließmodul ausgelöst wird, sobald sich der Manipulatorarm und/oder ein mit Hilfe des Manipulatorarms gegriffenes und/oder transportiertes unbemanntes Luftfahrzeug gänzlich im Innenraum des Hangars befindet. Das Schließmodul kann dazu entsprechende Sensoren umfassen.

Generell ist es denkbar, dass der Hangar die Anforderungen für die IP (Abkürzung für International Protection) Schutzklasse IP61, IP62, IP63, IP64, IP65, IP66, IP67 oder IP68 erfüllt oder durch eine der genannten Schutzklassen zertifiziert ist.

Insbesondere ist es denkbar, dass der Hangar bei geschlossener Öffnung hermetisch abgeriegelt ist. Ein unerwünschtes Eindringen von Schmutz und/oder Staub, Wasser und/oder Feuchtigkeit, Wärme, Kälte und/oder Lebewesen (beispielsweise Insekten) kann so besonders effizient vermieden werden. Denkbar ist hier beispielsweise ein Hangar, der die Kriterien der IP Schutzklasse IP67 erfüllt.

Der Hangar kann zudem ein Energiemodul umfassen, welches eingerichtet ist mindestens den Manipulatorarm und das Schließmodul energetisch zu versorgen. Das Energiemodul kann beispielsweise einen Energiespeicher wie eine Batterie oder einen Akkumulator umfassen, und/oder eine oder mehrere Verkabelungen und/oder einen Anschluss an ein Stromnetz. Über das Energiemodul kann der Manipulatorarm und das Schließmodul und/oder weitere Module und/oder Elemente mit Strom versorgt werden. Ein Energiespeicher ermöglicht es, dass der Hangar und seine Funktionen an jedem Ort genutzt werden kann, unabhängig von einer äußeren Stromversorgung. So ist zum Beispiel auch ein Nutzen in sehr abgelegenen Gebieten wie Wäldern, Wüsten, Polen, etc. möglich. Ferner ist es möglich, dass das Energiemodul dazu eingerichtet ist, den Energiespeicher des mindestens einen unbemannten Luftfahrzeugs aufzuladen.

Insbesondere ist es denkbar, dass das Energiemodul mindestens ein Solarpaneel und/oder Windkraftmodul umfasst. Somit kann der Hangar seine eigene Energieversorgung sicherstellen, insbesondere wenn die eigens hergestellte Energie in einem Energiespeicher gespeichert wird. Ein derartiger Hangar ist damit unabhängig von externer Energieversorgung.

Außerdem kann der Hangar ferner ein Nivellierungsmodul umfassen, welches dazu eingerichtet ist, den Hangar nach Aufstellung an einem Standort automatisch zu nivellieren. Der Hangar kann sich also selbst, auch wenn er auf unebenem Untergrund abgestellt wird nivellieren. Dies ermöglicht ein Positionieren und Einrichten des Hangars an einem Einsatzort unabhängig von menschlichem Zutun.

Ferner kann der Hangar ein Sensorikmodul umfassen, welches eingerichtet ist, den Abflug des mindestens einen unbemannten Luftfahrzeugs von der Start- und/oder Landefläche zu überprüfen und/oder die Landung mindestens eines unbemannten Luftfahrzeugs auf der Start- und/oder Landefläche zu überprüfen und/oder zu registrieren. Das Sensorikmodul kann beispielsweise eine Kamera, einen akustischen Sensor und/oder einen Drucksensor umfassen. Ein derartiges Sensorikmodul kann mit dem Schließmodul und/oder dem Manipulatorarm und/oder anderen Modulen verbunden sein, sodass automatisch die Öffnung der Öffnung in der mindestens einen Seitenwand und die Aktivierung des Manipulatorarms initiiert wird, sobald ein unbemanntes Luftfahrzeug auf der Landefläche landet. Das Sensorikmodul kann an einen externen Prozessor Daten über Start- und/oder Landevorgänge und/oder deren Erfolg und/oder Misserfolg übermitteln.

Insbesondere ist es denkbar, dass das Sensorikmodul eingerichtet ist, die Einsatzbereitschaft des Hangars und/oder der darin befindlichen unbenannten Luftfahrzeuge zu überwachen und/oder den Status der Einsatzbereitschaft (Einsatzbereitschaft des Hangars und/oder aller oder einzelner oder mehrerer unbemannter Luftfahrzeuge) über eine drahtlose Verbindung nach außen, z.B. an eine externe Vorrichtung zu übertragen. Der Hangar kann dabei alle in ihm verbauten Sensoriken zur Selbstüberwachung der Einsatzbereitschaft nutzen. Denkbar ist hierbei, dass eine automatisierte Telematikauswertung eines unbemannten Luftfahrzeugs nach der Mission (also nachdem das unbenannte Luftfahrzeug nach einer Mission wieder auf dem Hangar gelandet und darin verstaut wurde) im Sinne einer Nachflugkontrolle erfolgt, und der Status der Einsatzbereitschaft zumindest teilweise auf der automatisierten Nachflugkontrolle beruht. Insbesondere ist es denkbar, dass auf die Nachflugkontrolle ein automatisches Auffüllen und/oder Ersetzen von Verbrauchsmaterialien und/oder Ersatzteilen und/oder Ersatzmodulen des mindestens einen unbemannten Luftfahrzeugs erfolgt, durch den Manipulatorarm und/oder andere geeignete Mechaniken.

Gemeinsam mit der Möglichkeit Verbrauchsmaterial und/oder Ersatzteile für ein unbemanntes Luftfahrzeug automatisiert im Hangar aufzufüllen und/oder auszutauschen und/oder dem Vorhalten mehrerer unbemannter Luftfahrzeuge werden die manuellen Eingriffe am Aufstellungsort des Hangars auf ein Minimum reduziert. Das erhöht die Flexibilität und Einsatzbereitschaft um ein Vielfaches und senkt Personalaufwand und Personalkosten signifikant.

Insbesondere kann der Hangar ferner ein Kontrollmodul umfasst, welches konfiguriert ist, den mindestens einen Manipulatorarm und/oder das mindestens eine Schließmodul und/oder das Nivellierungsmodul und/oder das Temperaturregulationsmodul und/oder das Sensorikmodul zu steuern. Insbesondere ist es auch denkbar, dass das Kontrollmodul den Manipulatorarm und/oder das mindestens eine Schließmodul und/oder das Nivellierungsmodul und /oder das Temperaturregulationsmodul und/oder das Sensorikmodul synchronisiert. Alternativ und/oder zusätzlich ist es denkbar, dass die genannten Module und/oder der Manipulatorarm über ein externes Kontrollmodul gesteuert werden. Insbesondere ist es möglich, dass der Hangar und/oder die oben genannten Module und/oder der Manipulatorarm über mindestens eine Verbindung (drahtlos und/oder Kabelverbindung) mit einem externen Prozessor verbindbar sind, sodass sie von extern gesteuert und/oder programmiert werden können.

Die Größe des Hangars kann generell der Anzahl der darin verstauten oder zu verstauenden unbemannten Luftfahrzeuge und/oder deren Größe und/oder des vorgesehen Stauraums für Verbrauchsmaterialien und/oder Ersatzteile und/oder der im Hangar befindlichen und/oder am Hangar angegliederten Module oder Elemente (beispielsweise Energiemodul, Sensorikmodul, Kontrollmodul, Temperaturregulationsmodul, Schließmodul Nivellierungsmodul, Manipulatorarm, etc.) und/oder der Größe der Start- und Landefläche angepasst sein.

Insbesondere kann ein Hangar eine Transport- und/oder Trage- und/oder Hebe- und/oder Ziehvorrichtung umfassen, beispielsweise einen oder mehrere Griffe, Haken, Reling, Träger, Ösen, Räder und/oder Rollen und/oder Anhänger. Dies ermöglicht einen erleichterten Transport und/oder das einfachere Abstellen an einem gewünschten Ort und/oder das einfachere Abholen an einem gewünschten Ort. Auf einfache Art und Weise kann der Einsatzort somit flexibel gestaltet werden.

In einer bevorzugten Ausführungsform hat der Hangar mitsamt seines Inhalts ein Gewicht von 300kg pro qm (gemessen an der Unterseite des Hangars) oder weniger. Dies kann ein sicheres Abstellen eines Hangars auf einem Flachdach ermöglichen
Ferner umfasst die Erfindung ein System umfassend mindestens zwei Hangars. Insbesondere ist es denkbar, dass die mindestens zwei Hangars über mindestens eine Verbindung (drahtlos oder Kabelverbindung) miteinander verbunden sind. Somit ist ein Austausch von Informationen zwischen dem beiden Hangars möglich. Ein derartiges Hangarsystem ist insbesondere von Vorteil, wenn an einem Einsatzort eine Vielzahl von unbemannten Luftfahrzeugen (mehr als in einem einzelnen Hangar abstellbar sind), erforderlich ist.

Ferner umfasst die Erfindung eine Vorrichtung, die eingerichtet ist mehrere Hangars nach einem der vorhergehenden Ansprüche von einer Lager- und oder Transportvorrichtung abzuladen. Die Vorrichtung kann beispielsweise von extern gesteuert werden, sodass ein menschliches Zutun vor Ort, am Ablageort nicht notwendig ist. Dies ermöglicht einen unkomplizierten Einsatz des einen oder mehreren Hangars, auch an Orte, die für Menschen schwer zugänglich sind oder nur mit großem Aufwand erreichbar sind.

Weitere Einzelheiten und Vorteile der Erfindungen sollen nun anhand in den Zeichnungen näher dargestellter Ausführungsbeispiele erläutert werden.

Es zeigen:
**Fig. 1** ein erfindungsgemäßes Ausführungsbeispiel eines Hangars 100 für mindestens ein unbemanntes Luftfahrzeug 104 in einer perspektivischen Darstellung;
**Fig. 2** eine weitere perspektivische Darstellung eines Hangars 100, mit zwei Ebenen 120 im Innenraum 106;
**Fig. 3** eine weitere perspektivische Darstellung eines Hangars 100, gemäß Fig. 1 oder Fig. 2, mit geschlossener Öffnung 118;
**Fig. 4** eine Seitenansicht eines Hangars 100 gemäß Fig. 3;
Fig. 5 eine Rückansicht eines Hangars 100 gemäß Fig. 1 oder Fig. 2;
Fig. 6 eine schematische, perspektivische Darstellung des in Fig. 2 dargestellten Hangars 100;
Fig. 7 eine schematische, perspektivische Darstellung des in Fig. 2 dargestellten Hangars 100 in Seitenansicht; und
Fig. 8 eine schematische, perspektivische Darstellung des in Fig. 2 dargestellten Hangars 100 in Rückansicht.

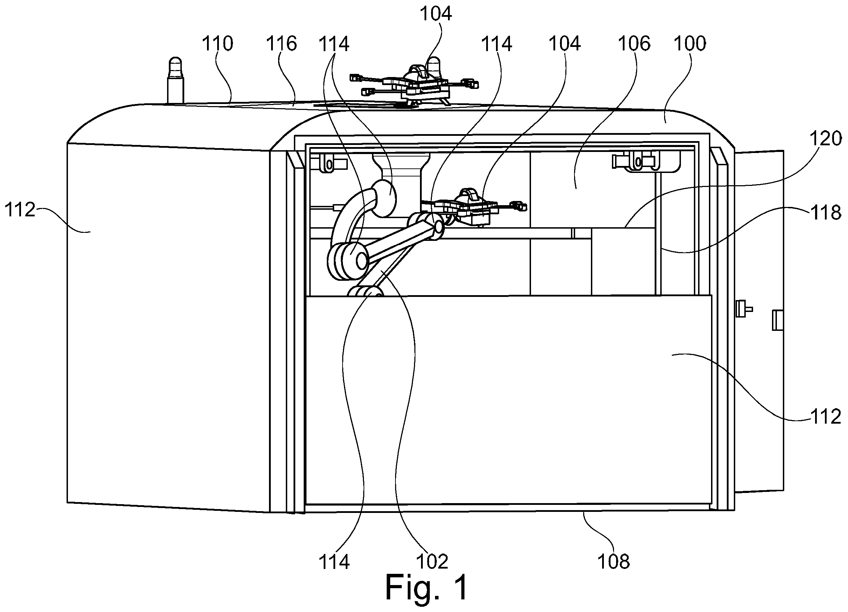

Fig. 1 zeigt ein erfindungsgemäßes Ausführungsbeispiel eines Hangars 100 für mindestens ein unbemanntes Luftfahrzeug 104 in einer perspektivischen Darstellung.

Der Hangar umfasst einen Innenraum 106, der durch eine Unterseite 108, eine Oberseite 110 und vier Seitenteile 112 begrenzt wird.

Eines der Seitenteile 112, in diesem Ausführungsbeispiel das Seitenteil auf der Vorderseite 112, weist eine verschließbare Öffnung 118 auf.

In diesem Ausführungsbeispiel ist die verschließbare Öffnung 118 in einem offenen Zustand dargestellt.

Nicht gezeigt ist, dass die verschließbare Öffnung 118 durch eine Schiebetüre verschließbar ist.

In diesem Ausführungsbeispiel weist ein seitliches Seitenteil 112, in der Darstellung rechts, eine verschließbare Türe auf, die kontrollierten Zugang zum Innenraum 106 und darin enthaltenen Elementen, Modulen und/oder Luftfahrzeugen 104 bietet, beispielsweise für die Wartung. Diese Türe kann hermetisch abriegelbar sein.

Alternativ wäre nur ein Seitenteil 112 denkbar.

In diesem Ausführungsbeispiel umfasst die äußere Oberseite 110 eine Start- und/oder Landefläche 116 für das mindestens eine unbemannte Luftfahrzeug 104.

Der Hangar 100 umfasst ferner einen Manipulatorarm 102 in dem Innenraum 106.

In diesem Ausführungsbeispiel ist in dem Innenraum 106 eine Ebene 120 angeordnet, welche ein unbemanntes Luftfahrzeug 104 trägt.

In anderen Worten, in diesem Ausführungsbeispiel ist ein unbemanntes Luftfahrzeug 104 auf der Ebene 120 im Innenraum 106 des Hangars 100 geparkt und/oder abgestellt.

Ferner ist auf der Start- und/oder Landefläche 116 ein unbemanntes Luftfahrzeug 104 dargestellt.

In diesem Ausführungsbeispiel umfasst der Manipulatorarm 102 vier Gelenke 114.

Generell kann der Manipulatorarm 102 drei oder mehr Gelenke 114 umfassen.

Nicht gezeigt in Fig. 1 ist, dass der Hangar 100 ein Temperaturmodul umfasst.

Ferner ist nicht gezeigt in Fig. 1, dass der Hangar 100 ein Schließmodul umfasst, welches die verschließbare Öffnung 118 umfasst.

Nicht gezeigt in Fig. 1 ist, dass der Hangar 100 ein Energiemodul umfasst.

Außerdem ist nicht gezeigt, dass das Energiemodul mindestens ein Solarpaneel und/oder ein Windkraftmodul umfassen kann.

Fig. 1 zeigt auch nicht explizit, dass der Hangar 100 ferner ein Nivellierungsmodul.

Außerdem ist nicht explizit gezeigt, dass der Hangar 100 ein Sensorikmodul umfasst.

Nicht explizit gezeigt ist, dass der Hangar 100 ferner ein Kontrollmodul umfasst.

Nicht gezeigt in Fig. 1 ist, dass die Eigenschaften des unbemannten Luftfahrzeugs 104 beispielsweise Hersteller, Typ, Größe und/oder Ausgestaltung umfassen.

Nicht gezeigt in Fig. 1 ist, dass der Hangar 100 Teil eines Systems von zwei Hangars 100 ist.

Nicht gezeigt in Fig. 1 ist, dass 14 der Hangar 100 ferner mehrere Haken als Hebe und/oder Trage und/oder Ziehvorrichtung umfasst.

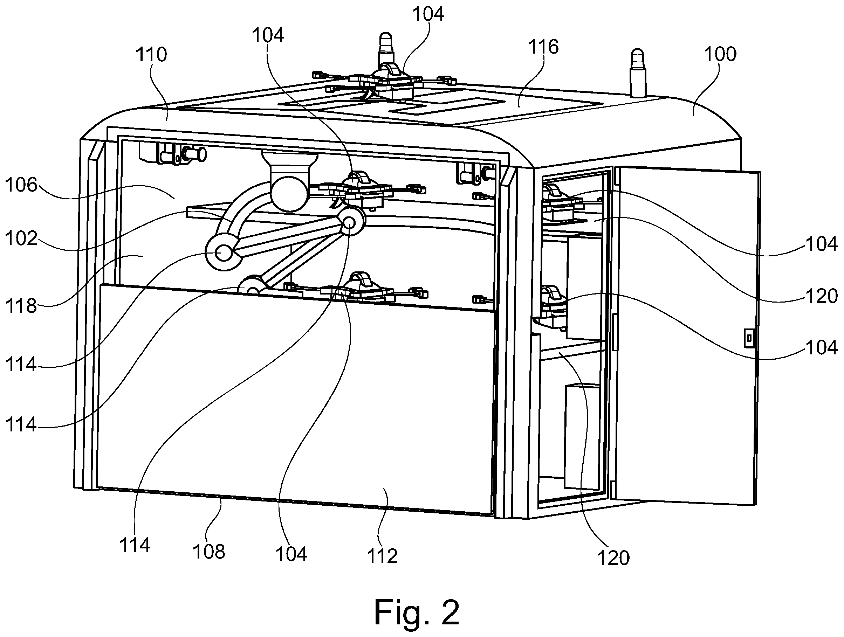

**Fig. 2** zeigt eine weitere perspektivische Darstellung eines Hangars 100, mit zwei Ebenen 120 im Innenraum 106.

Der abgebildete Hangar 100 entspricht im Wesentlichen in Struktur und Funktion dem in Fig. 1 dargestellten Hangar 100.

Anders als in Fig. 1 sind in Fig. 2 zwei Ebenen 120 im Innenraum 106 dargestellt. Jeder der zwei Ebenen 120 trägt zwei unbemannte Luftfahrzeuge 104.

In diesem Ausführungsbeispiel sind die unbemannten Luftfahrzeuge 104 im Wesentlichen identisch. Alternativ ist es möglich, dass unterschiedliche Luftfahrzeuge 104 durch den Manipulatorarm 102 transportiert werden und im Hangar abgestellt werden können, bis zum entsprechenden Einsatz.

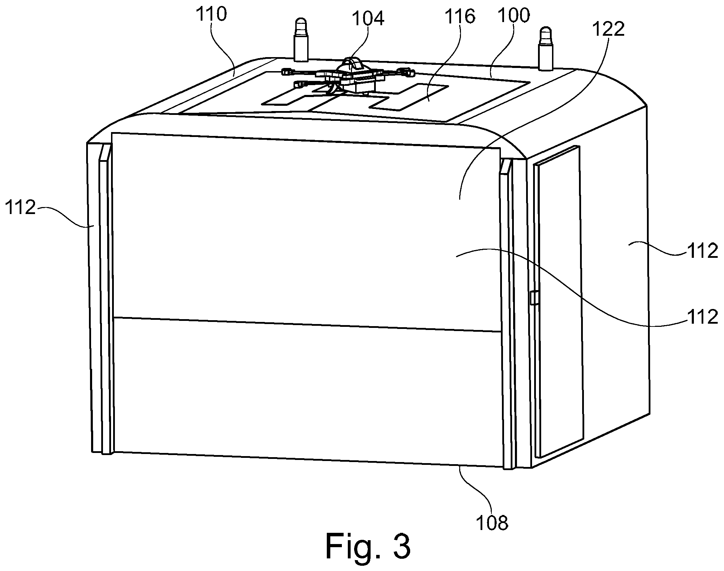

**Fig. 3** zeigt eine weitere perspektivische Darstellung eines Hangars 100, gemäß Fig. 1 oder Fig. 2, mit geschlossener Öffnung 118.

Die Öffnung 118 im vorderen Seitenteil 112 wurde durch eine Schiebetüre verschlossen.

Nicht explizit gezeigt ist, dass der geschlossene Hangar 100 hermetisch abgeriegelt ist.

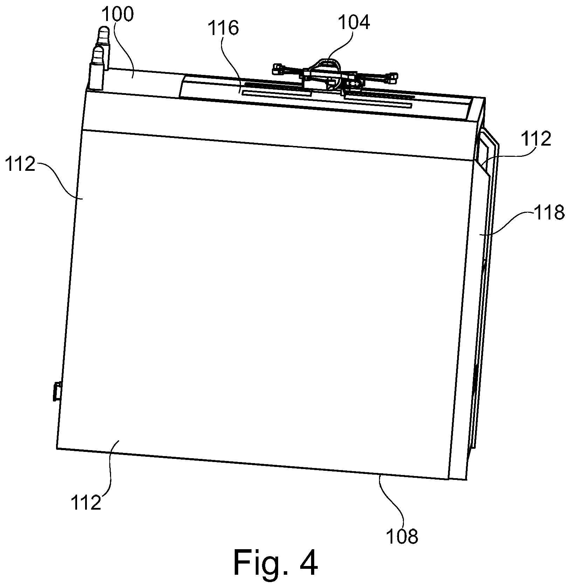

**Fig. 4** zeigt eine Seitenansicht eines Hangars 100 gemäß Fig. 3.

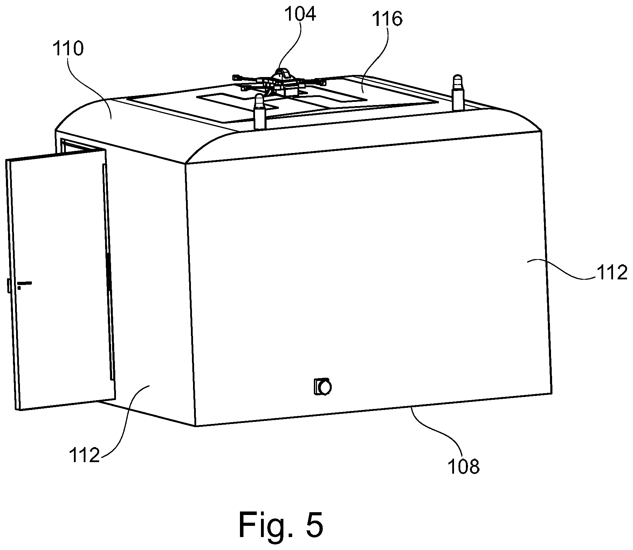

**Fig. 5** zeigt eine Rückansicht eines Hangars 100 gemäß Fig. 1 oder Fig. 2.

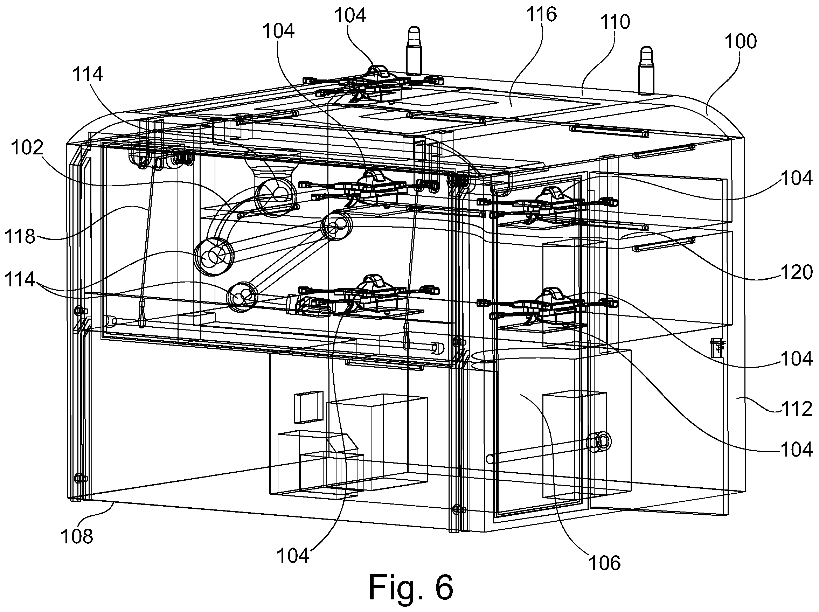

**Fig. 6** zeigt eine schematische, perspektivische Darstellung des in Fig. 2 dargestellten Hangars 100.

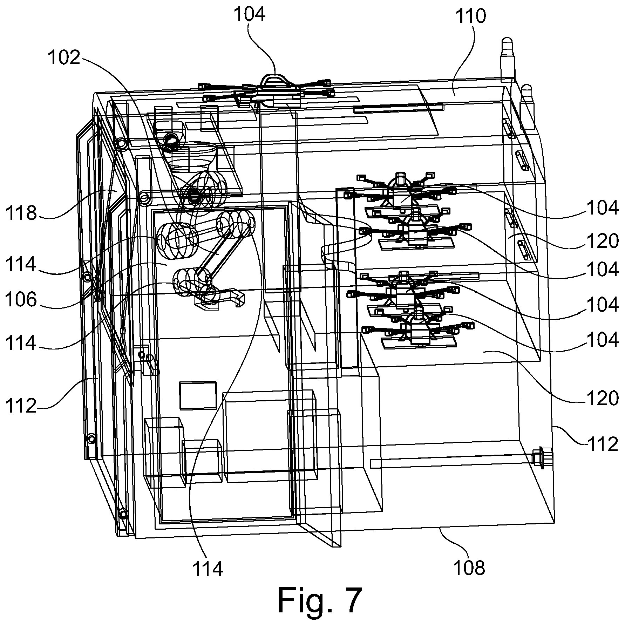

**Fig. 7** zeigt eine schematische, perspektivische Darstellung des in Fig. 2 dargestellten Hangars 100 in Seitenansicht.

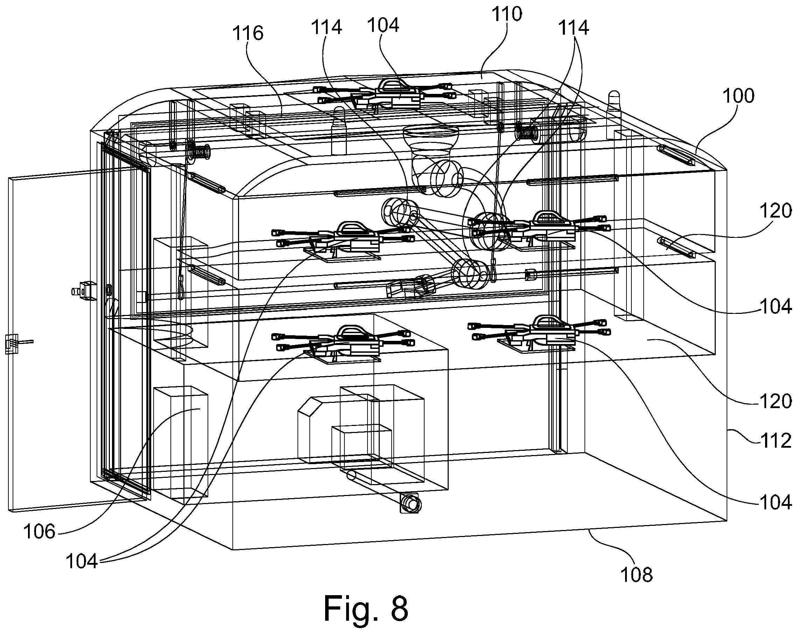

**Fig. 8** zeigt eine schematische, perspektivische Darstellung des in Fig. 2 dargestellten Hangars 100 in Rückansicht.

Die Funktion des Hangars 100 lässt sich wie folgt beschreiben:
Der Hangar 100 ist in der in den Figuren gezeigten Ausführungsform als Hangar für mindestens ein unbemanntes Luftfahrzeug 104 ausgeführt. Er kann beispielsweise in der Drohnen-basierten Wasserrettung und/oder Bergung, der Drohnen-basierten Suche, der Fotografie und Laufaufnahme, der Wettervorhersage, des Versands, Sportveranstaltungen (z.B. Drohnenrennen), in der Landwirtschaft, der Wissenschaft, dem Transportwesen, der Datensammlung, der Überwachung von kritischen Infrastrukturen (KRITIS,. beispielsweise Energie- und Wasserversorgung, Verkehr, aber auch die medizinische Versorgung), der Schadstoffidentifikation, insbesondere mithilfe geeigneter Sensorikmodule und/oder Grenzüberwachung zum Einsatz kommen. Alternative Einsatzarten sind möglich.

Bei Drohnen-basierter Wasserrettung erfolgt durch die Drohne ein Abwurf von Rettungsmitteln (z.B. Schwimmhilfen) am oder nahe des Rettungsorts. Ein Auffüllen der Drohne mit Rettungsmitteln ist nach erfolgter Mission im Rahmen der Nachflugkontrolle möglich.

Bei Bergung und Schadenfällen erfolgt durch die Drohne ein Abwurf von Sensorik (beispielsweise eine Ultraschall-Unterwasserkugel) oder ein Absetzen von Sensorik bei Schadenslagen (z.B. bei Schäden durch die chemische / pharmazeutische Industrie). Die Drohne kann hierbei insbesondere als Kommunikationsknotenpunkt (Kommunikations-hub) dienen. Hier ist es zudem denkbar, dass auch der Hangar, zu dem die Drohne nach erfolgter Mission zurückkehrt, als Kommunikationsknotenpunkt dient, indem Messdaten, die nicht zeitkritisch sind, von der Drohne über den Hangar an einen externen Empfänger übertragen werden.

Der Aufbau des Hangars 100 und des Manipulatorarms 100 ermöglicht die notwendige Bewegungsfreiheit, um mindestens ein unbemanntes Luftfahrzeug 104 sicher im Hangar 100 oder auf der Start- und/oder Landefläche 116 abzustellen.

Der Manipulatorarm 102 ist so ausgestaltet, dass er ein unbemanntes Luftfahrzeug 104 von einer Ebene in dem Innenraum 106 durch die verschließbare Öffnung 118 in dem Seitenteil 112 aus dem Innenraum 106 auf die äußere Oberseite 110 des Hangars 100 transportieren kann.

Alternativ und/oder zusätzlich kann der Manipulatorarm 102 ein unbemanntes Luftfahrzeug 104 auf der äußeren Oberfläche 110, genauer auf der Start- und oder Landefläche 116, durch die verschließbare Öffnung 118 in dem einen Seitenteil 112 von der äußeren Oberseite 110 des Hangars 100 in den Innenraum 106 transportieren. Insbesondere kann der Manipulatorarm 102 das unbemannte Luftfahrzeug 104 auf einer Ebene 120 abstellen. Durch das Abstellen mehrerer unbemannter Luftfahrzeuge auf einer (Fig. 1) oder auf mehreren Ebenen 120 kann der Hangar 100 als Hafen und/oder Basis und/oder Abstellort für mehrere unbemannte Luftfahrzeuge 104 eingesetzt werden.

Generell ist der Manipulatorarm 102 so ausgestaltet, dass er den Transport eines oder mehrerer unbemannter Luftfahrzeuge 104, unabhängig dessen oder deren Eigenschaften durchführen kann.

Die Funktion des Manipulatorarms 102 und/oder des Hangars 100 beruht auf der Idee, dass der Manipulatorarm 102 und/oder das Kontrollmodul so programmiert werden kann, dass der Manipulatorarm 102 entweder ein bestimmtes oder verschiedene Ausführungsformen von Luftfahrzeugen 104 identifizieren und/oder greifen und/oder transportieren kann. In anderen Worten, der Manipulatorarm ist für den Transport verschiedener unbemannter Luftfahrzeuge 104 mit unterschiedlichen Eigenschaften programmierbar und eingerichtet. Die Programmierung kann wiederholt überarbeitet und/oder überholt und/oder erneuert werden und/oder ergänzt werden.

Dadurch, dass der Manipulatorarm 102 und/oder das Kontrollmodul, auch wiederholt, für das Erkennen und/oder den Transport eines oder mehrerer gleicher oder unterschiedlicher unbemannter Luftfahrzeuge 104 programmiert werden kann, ergibt sich eine große Flexibilität. Der Hangar 100 und der Manipulatorarm 102 sind damit nicht spezifisch für einen Typ von unbemanntem Luftfahrzeug 104 hergestellt und konzipiert, sondern für verschiedene Typen von unbemannten Luftfahrzeugen 104 geeignet.

Generell ist das Kontrollmodul konfiguriert, den mindestens einen Manipulatorarm 102 und/oder das mindestens eine Schließmodul und/oder das Nivellierungsmodul und/oder das Temperaturregulationsmodul und/oder das Sensorikmodul zu steuern.

Das Schließmodul ist eingerichtet, die verschließbare Öffnung 118 durch eine Klappe oder Türe 122 zu öffnen, zu schließen, offen zu halten oder geschlossen zu halten.

Das Temperaturkontrollmodul reguliert die Temperatur im Innenraum 106 auf einen vorprogrammierten Wert.

Das Energiemodul versorgt den Hangar 100, einzelne oder alle Module und/oder Elemente, mindestens jedoch den Manipulatorarm 102 und das Schließmodul mit Energie.

Das Sensorikmodul registriert und/oder überprüft den Abflug des mindestens einen unbemannten Luftfahrzeugs 104 von der Start- und/oder Landefläche 116 und/oder die Landung mindestens eines unbemannten Luftfahrzeugs 104 auf der Start- und/oder Landefläche 116.

Das Nivellierungsmodul nivelliert den Hangar 100 automatisch nach Aufstellung an einem Standort.

### Bezugszeichenliste

- 100: Hangar
- 102: Manipulatorarm
- 104: Luftfahrzeug
- 106: Innenraum
- 108: Unterseite
- 110: Oberseite
- 112: Seitenteil
- 114: Gelenk
- 116: Start-/ Landefläche
- 118: Öffnung
- 120: Ebene
- 122: Klappe/Türe

## Patentansprüche

1. Hangar (100) für mindestens ein unbemanntes Luftfahrzeug (104), umfassend:
einen Innenraum (106), der durch eine Unterseite (108), eine Oberseite (110) und mindestens ein Seitenteil (112) begrenzt wird,
wenigstens einen Manipulatorarm (102) in dem Innenraum (106),
wobei der Manipulatorarm (102) ausgestaltet ist, das mindestens eine unbemannte Luftfahrzeug (104) durch eine verschließbare Öffnung (118) in dem mindestens einen Seitenteil (112) aus dem Innenraum (106) auf die äußere Oberseite (110) des Hangars (100) zu transportieren und/oder
wobei der Manipulatorarm (102) ausgestaltet ist, das mindestens eine unbemannte Luftfahrzeug (104) durch eine verschließbare Öffnung (114) in dem mindestens einen Seitenteil (112) von der äußeren Oberseite (110) des Hangars in den Innenraum (106) zu transportieren,
wobei der Manipulatorarm (102) für den Transport verschiedener unbemannter Luftfahrzeuge (104) mit unterschiedlichen Eigenschaften programmierbar und/oder eingerichtet ist.

2. Hangar (100) nach Anspruch 1, wobei die Eigenschaften des unbemannten Luftfahrzeugs (104) beispielsweise Hersteller, Typ und/oder Ausgestaltung umfassen.

3. Hangar (100) nach Anspruch 1 oder 2, wobei der Manipulatorarm (102) wenigstens drei Gelenke (114) umfasst.

4. Hangar (100) nach Anspruch 1, 2 oder 3, wobei in dem Innenraum (106) wenigstens eine Ebene (120) angeordnet ist, welche dazu eingerichtet ist, jeweils mindestens ein unbemanntes Luftfahrzeug (104) zu tragen.

5. Hangar (100) nach einem der vorstehenden Ansprüche, wobei die äußere Oberseite (110) eine Start- und/oder Landefläche (116) für das mindestens eine unbemannte Luftfahrzeug (104) umfasst.

6. Hangar (100) nach einem der vorstehenden Ansprüche, wobei der Hangar (100) ein Temperaturregulationsmodul umfasst, welches dazu eingerichtet, die Temperatur im Innenraum (106) auf einen vorprogrammierten Wert zu regulieren.

7. Hangar (100) nach einem der vorstehenden Ansprüche, wobei der Hangar (100) ein Schließmodul umfasst, umfassend die verschließbare Öffnung (118), wobei das Schließmodul eingerichtet ist, die verschließbare Öffnung (118) durch eine Klappe oder Türe zu öffnen, zu schließen, offen zu halten oder geschlossen zu halten.

8. Hangar (100) nach Anspruch 7, wobei der Hangar bei geschlossener Öffnung (118) hermetisch abgeriegelt ist.

9. Hangar (100) nach einem der vorstehenden Ansprüche, ferner umfassend ein Energiemodul, welches eingerichtet ist mindestens den Manipulatorarm (102) und das Schließmodul energetisch zu versorgen.

10. Hangar (100) nach Anspruch 9, wobei das Energiemodul mindestens ein Solarpaneel und/oder ein Windkraftmodul umfasst.

11. Hangar (100) nach einem der vorstehenden Ansprüche, wobei der Hangar (100) ferner ein Nivellierungsmodul umfasst, welches dazu eingerichtet ist, den Hangar (100) nach Aufstellung an einem Standort automatisch zu nivellieren.

12. Hangar (100) nach einem der vorstehenden Ansprüche, wobei der Hangar (100) ein Sensorikmodul umfasst, welches eingerichtet ist, den Abflug des mindestens einen unbemannten Luftfahrzeugs (104) von der Start- und/oder Landefläche (116) zu überprüfen und/oder die Landung mindestens eines unbemannten Luftfahrzeugs (104) auf der Start- und/oder Landefläche (116) zu überprüfen und/oder zu registrieren.

13. Hangar (100) nach einem der vorstehenden Ansprüche, wobei der Hangar (100) ferner ein Kontrollmodul umfasst, welches konfiguriert ist, den mindestens einen Manipulatorarm (102) und/oder das mindestens eine Schließmodul und/oder das Nivellierungsmodul und/oder das Temperaturregulationsmodul und/oder das Sensorikmodul zu steuern.

14. Hangar (100) nach einem der vorstehenden Ansprüche, wobei der Hangar (100) ferner eine Transport- und/oder Trage- und/oder Hebe- und/oder Ziehvorrichtung umfasst.

15. System umfassend mindestens zwei Hangars (100) nach einer der vorstehenden Ansprüche.

## Claims

1. A hangar (100) for at least one unmanned aircraft (104), comprising: an interior space (106) bounded by a bottom surface (108), a top surface (110), and at least one side panel (112),
at least one manipulator arm (102) within the interior (106),
wherein the manipulator arm (102) is configured to transport the at least one unmanned aerial vehicle (104) through a closable opening (118) in the at least one side panel (112) from the interior (106) to the outer top surface (110) of the hangar (100) and/or
wherein the manipulator arm (102) is configured to transport the at least one unmanned aerial vehicle (104) through a closable opening (114) in the at least one side panel (112) from the outer top surface (110) of the hangar into the interior (106), wherein the manipulator arm (102) is programmable and/or configured to transport various unmanned aerial vehicles (104) with different characteristics.

2. Hangar (100) according to claim 1, wherein the characteristics of the unmanned aerial vehicle (104) include, for example, manufacturer, type, and/or configuration.

3. A hangar (100) according to claim 1 or 2, wherein the manipulator arm (102) comprises at least three joints (114).

4. A hangar (100) according to claim 1, 2, or 3, wherein at least one level (120) is arranged within the interior (106), which is configured to support at least one unmanned aircraft (104) at a time.

5. A hangar (100) according to any one of the preceding claims, wherein the outer top surface (110) comprises a takeoff and/or landing surface (116) for the at least one unmanned aircraft (104).

6. A hangar (100) according to any of the preceding claims, wherein the hangar (100) comprises a temperature control module configured to regulate the temperature within the interior (106) to a preprogrammed value.

7. A hangar (100) according to any of the preceding claims, wherein the hangar (100) comprises a closure module including the lockable opening (118), wherein the closure module is configured to open, close, hold open, or hold closed the lockable opening (118) by means of a flap or door.

8. A hangar (100) according to claim 7, wherein the hangar is hermetically sealed when the opening (118) is closed.

9. A hangar (100) according to any of the preceding claims, further comprising a power module configured to supply power to at least the manipulator arm (102) and the closure module.

10. A hangar (100) according to claim 9, wherein the power module comprises at least one solar panel and/or one wind power module.

11. A hangar (100) according to any of the preceding claims, wherein the hangar (100) further comprises a leveling module configured to automatically level the hangar (100) after it has been set up at a location.

12. Hangar (100) according to any of the preceding claims, wherein the hangar (100) comprises a sensor module configured to monitor the takeoff of the at least one unmanned aircraft (104) from the takeoff and/or landing area (116) and/or to monitor and/or record the landing of the at least one unmanned aircraft (104) on the takeoff and/or landing area (116).

13. A hangar (100) according to any one of the preceding claims, wherein the hangar (100) further comprises a control module configured to control the at least one manipulator arm (102) and/or the at least one locking module and/or the leveling module and/or the temperature control module and/or the sensor module.

14. A hangar (100) according to any of the preceding claims, wherein the hangar (100) further comprises a transport and/or carrying and/or lifting and/or pulling device.

15. A system comprising at least two hangars (100) according to any one of the preceding claims.

## Revendications

1. Hangar (100) destiné à accueillir au moins un aéronef sans pilote (104), comprenant : un espace intérieur (106) délimité par une surface inférieure (108), une surface supérieure (110) et au moins un panneau latéral (112),
au moins un bras manipulateur (102) à l'intérieur de l'espace intérieur (106),
dans lequel le bras manipulateur (102) est configuré pour transporter le ou les véhicules aériens sans pilote (104) à travers une ouverture refermable (118) pratiquée dans le ou les panneaux latéraux (112), depuis l'espace intérieur (106) jusqu'à la surface supérieure extérieure (110) du hangar (100) et/ou
dans lequel le bras manipulateur (102) est configuré pour transporter ledit au moins un véhicule aérien sans pilote (104) à travers une ouverture pouvant être fermée (114) pratiquée dans ledit au moins un panneau latéral (112), depuis la surface supérieure extérieure (110) du hangar vers l'intérieur (106),
dans lequel le bras manipulateur (102) est programmable et/ou configuré pour transporter divers véhicules aériens sans pilote (104) présentant des caractéristiques différentes.

2. Hangar (100) selon la revendication 1, dans lequel les caractéristiques du véhicule aérien sans pilote (104) comprennent, par exemple, le fabricant, le type et/ou la configuration.

3. Hangar (100) selon la revendication 1 ou 2, dans lequel le bras manipulateur (102) comprend au moins trois articulations (114).

4. Hangar (100) selon la revendication 1, 2 ou 3, dans lequel au moins un niveau (120) est agencé à l'intérieur (106), lequel est configuré pour supporter au moins un aéronef sans pilote (104) à la fois.

5. Hangar (100) selon l'une quelconque des revendications précédentes, dans lequel la surface supérieure extérieure (110) comprend une surface de décollage et/ou d'atterrissage (116) pour ledit au moins un aéronef sans pilote (104).

6. Hangar (100) selon l'une quelconque des revendications précédentes, dans lequel le hangar (100) comprend un module de régulation de température configuré pour réguler l' de température à l'intérieur (106) à une valeur préprogrammée.

7. Hangar (100) selon l'une quelconque des revendications précédentes, dans lequel le hangar (100) comprend un module de fermeture comportant l'ouverture verrouillable (118), le module de fermeture étant configuré pour ouvrir, fermer, maintenir ouverte ou maintenir fermée l'ouverture verrouillable (118) au moyen d'un volet ou d'une porte.

8. Hangar (100) selon la revendication 7, dans lequel le hangar est hermétiquement fermé lorsque l'ouverture (118) est fermée.

9. Hangar (100) selon l'une quelconque des revendications précédentes, comprenant en outre un module d'alimentation configuré pour alimenter en énergie au moins le bras manipulateur (102) et le module de fermeture.

10. Hangar (100) selon la revendication 9, dans lequel le module d'alimentation comprend au moins un panneau solaire et/ou un module éolien.

11. Hangar (100) selon l'une quelconque des revendications précédentes, dans lequel le hangar (100) comprend en outre un module de mise à niveau configuré pour mettre automatiquement le hangar (100) à niveau après son installation sur un site.

12. Hangar (100) selon l'une quelconque des revendications précédentes, dans lequel le hangar (100) comprend un module de capteurs configuré pour surveiller le décollage du au moins un aéronef sans pilote (104) depuis la zone de décollage et/ou d'atterrissage (116) et/ou à surveiller et/ou à enregistrer l'atterrissage dudit au moins un aéronef sans pilote (104) sur la zone de décollage et/ou d'atterrissage (116).

13. Hangar (100) selon l'une quelconque des revendications précédentes, dans lequel le hangar (100) comprend en outre un module de commande configuré pour commander le au moins un bras manipulateur (102) et/ou le au moins un module de verrouillage et/ou le module de mise à niveau et/ou le module de régulation de température et/ou le module de capteurs.

14. Hangar (100) selon l'une quelconque des revendications précédentes, dans lequel le hangar (100) comprend en outre un dispositif de transport et/ou de portage et/ou de levage et/ou de traction.

15. Système comprenant au moins deux hangars (100) selon l'une quelconque des revendications précédentes.
